# FASCICULE DE BREVET EUROPEEN

(11) **EP 0 871 234 B1**
(45) Date de publication et mention de la délivrance du brevet: **11.12.2002**
(21) Numéro de dépôt: 98400486.1
(22) Date de dépôt: 02.03.1998
(51) Int. Cl.: H01M 10/40, H01M 2/16

(54) **Procédé de fabrication d'un générateur électrochimique à électrolyte organique ayant une structure unitaire**
Verfahren zur Herstellung eines elektrochemischen Generators mit organischem Elektrolyten und mit einheitlicher Struktur
Process for manufacturing organic electrolyte containing electrochemical generator having unitary structure

(30) Priorité: 03.03.1997 FR 9702494
(43) Date de publication de la demande: 14.10.1998
(73) Titulaire: ALCATEL, 75008 Paris (FR)
(72) Inventeur: Andrieu, Xavier, 91220 Bretigny-sur-Orge (FR); Boudin, François, 91290 Arpajon (FR)
(74) Mandataire: Korakis-Ménager, Sophie

(56) Documents cités:
- EP-A- 0 730 316
- EP-A- 0 803 925
- WO-A-95/15589
- WO-A-96/20504
- US-A- 5 514 461
- PATENT ABSTRACTS OF JAPAN vol. 097, no. 005, 30 mai 1997 & JP 09 022727 A (TOSHIBA BATTERY CO LTD), 21 janvier 1997,

## Description

La présente invention concerne un procédé destiné à la fabrication d'un générateur électrochimique à électrolyte organique dont la structure est unitaire, c'est à dire que les différents éléments dont il est constitué sont reliés de manière à former un tout unique.

Les générateurs à électrolyte organique, en particulier au lithium, connaissent un développement rapide et de grande ampleur en raison de la forte énergie volumique disponible et de leur longue durée de vie. Leur utilisation est particulièrement appréciée lorsqu'il s'agit d'objet de faible encombrement.

Les générateurs traditionnels sont composés d'électrodes solides encadrant un séparateur poreux contenant l'électrolyte liquide. En raison des risques de fuite, ces générateurs sont mal adaptés aux équipement portables destinés au grand public.

Des générateurs comportant un électrolyte rendu solide par immobilisation dans une matrice polymérique ont alors été proposés. Mais au cours du temps le contact électrique entre les différents constituants du générateur se dégrade, notamment s'il se produit un dégagement gazeux. Afin de limiter ce phénomène le générateur est maintenu pressé par un conteneur métallique rigide, ce qui augmente le poids du générateur. On a donc cherché à relier les différents constituants du générateur afin que le contact électrique entre eux soit assuré en toutes circonstances.

Un procédé pour la réalisation d'un générateur électrochimique dont les différentes couches sont liées a été proposé dans le brevet US-5,540,741. Pour constituer une première électrode, on dépose sur un support conducteur une pâte formée d'un matériau électrochimiquement actif et d'une solution de polymère. Après séchage on recouvre l'électrode d'une couche d'une solution d'un copolymère de fluorure de vinylidène et d'hexafluoropropylène (VDF-HFP) et d'un plastifiant pour former le séparateur. On recouvre l'ensemble précédemment réalisé par une deuxième électrode constituée d'une feuille de lithium fabriquée par ailleurs. On effectue une compression à une température d'au moins 150°C provoquant la fusion complète du copolymère qui conduit à un matériau non-poreux. Le plastifiant est ensuite extrait à l'aide d'un solvant inerte vis à vis du polymère. Lors de son utilisation, le générateur est imprégné par l'électrolyte qui occupe le vide laissé entre les chaînes du polymère par le départ du plastifiant.

Ce procédé a pour inconvénient d'entrainer de fortes variations dimensionnelles au cours de la fabrication du générateur. Lors de l'extraction il se produit un effondrement de la structure conduisant à un matériau dense. En conséquence l'imprégnation par l'électrolyte est lente. L'imprégnation entraîne ensuite le gonflement du copolymère VDF-HFP en présence du solvant de l'électrolyte. Ces variations dimensionnelles provoque des phénomènes de resserrement et de décollement préjudiciables à la continuité électrique du générateur obtenu.

La présente invention a pour but de proposer un procédé pour la réalisation d'un générateur électrochimique de structure unitaire qui minimise les variations dimensionnelles.

L'objet de la présente invention est un procédé de fabrication d'un générateur électrochimique à électrolyte organique comprenant au moins un couple électrochimiquecomposé de deux électrodes encadrant un film solide de polymère poreux contenant ledit électrolyte, chaque électrode comportant une couche poreuse contenant un matériau électrochimiquement actif et un liant, caractérisé par le fait qu'il comprend les étapes suivantes :
- on met en solution un polymère dans un solvant,
- on étale ladite solution sur un support sous forme d'un film,
- on immerge ledit film de solution dans un non-solvant volatil miscible avec ledit solvant afin de précipiter ledit polymère,
- on sèche ledit film de polymère pour éliminer ledit non-solvant,
- on presse ledit couple imprégné avec ledit électrolyte, composé dudit film de polymère placé entre lesdites électrodes et à leur contact, en le chauffant à une température inférieure ou égale à la température de début de fusion dudit film de polymère de manière à obtenir une fusion incomplète dudit polymère, lesdites électrodes devenant indissociables après refroidissement.

L'invention présente de nombreux avantages par rapport aux procédés connus. L'imprégnation par l'électrolyte du film de polymère permet d'assurer la conservation de la porosité pendant l'étape de collage. Les pores ont une taille moyenne comprise entre 0,1µm et 1µm. Le volume poreux est important et représente 30% à 95% du volume du film.

La température de compression est choisie de telle sorte que la fusion du film polymère reste incomplète et principalement superficielle. L'adhésion du film sur les électrodes survient dès que la surface de collage est suffisamment ramollie. Par conséquent il ne se produit pas de variation dimensionnelle lors du collage et le volume poreux n'est pas sensiblement modifié. En outre dans le cas d'une imprégnation par l'électrolyte postérieure au collage, on observerait un gonflement du film ce qui est évité par le procédé selon l'invention.

Selon un mode de mise en oeuvre du procédé de l'invention, on utilise comme support, un support inerte.

Le film de polymère a une bonne tenue mécanique car le polymère lui-même contient moins de 30% du solvant de l'électrolyte, la majeure partie étant contenue dans sa porosité.

Selon une première variante, on imprègne ledit film de polymère et chacune desdites électrodes avec ledit électrolyte, puis on place ledit film de polymère entre lesdites électrodes et à leur contact pour former ledit couple.

Selon une deuxième variante, on place ledit film de polymère entre lesdites électrodes et à leur contact pour former ledit couple, puis on imprègne ledit couple avec ledit électrolyte

Selon un autre mode de mise en oeuvre du procédé de l'invention, on utilise comme support au moins l'une desdites électrodes de la manière suivante:
- on étale ladite solution sur la surface de ladite couche poreuse de l'une desdites électrodes sous forme d'un film,
- on immerge ledit film dans un non-solvant volatil miscible avec ledit solvant,
- on sèche ledit film pour éliminer ledit non-solvant,
- on imprègne ladite électrode comprenant ledit film avec ledit électrolyte,
- on recouvre ladite électrode du côté dudit film avec une électrode imprégnée avec ledit électrolyte pour former un couple électrochimique,
- on presse ledit couple en le chauffant à une température inférieure ou égale à la température de début de fusion dudit film de manière à obtenir une fusion incomplète dudit polymère, lesdites électrodes devenant indissociables après refroidissement.

Selon encore un autre mode de mise en oeuvre du procédé de l'invention, on utilise comme support lesdites deux électrodes de la manière suivante:
- on étale ladite solution sur la surface de ladite couche poreuse de chacune desdites électrodes sous forme d'un film,
- on immerge chacun desdits films dans un non-solvant volatil miscible avec ledit solvant,
- on sèche ledits films pour éliminer ledit non-solvant,- on imprègne lesdites électrodes comprenant lesdits films avec ledit électrolyte,
- on accole lesdites électrodes de telle manière que lesdits films soient en contact pour former un couple électrochimique,
- on presse ledit couple en le chauffant à une température inférieure ou égale à la température de début de fusion dudit film de manière à obtenir une fusion incomplète dudit polymère, lesdites électrodes devenant indissociables après refroidissement.

L'utilisation des électrodes comme support pour l'élaboration du film de polymère permet d'éviter les manipulations ultérieures et donc de déposer des films plus minces. Le procédé est ainsi simplifié et fiabilisé, et le produit obtenu plus performant.

Ledit polymère est choisi parmi le polyfluorure de vinylidène, le polychlorure de vinyle, le polyméthylmétacrylate, l'acétate de cellulose, une polysulfone, un polyéther, une polyoléfine, et parmi un alliage du polyfluorure de vinylidène avec un polymère choisi parmi une polysulfone, le polyméthylmétacrylate, le polyvinylpyrolidone, un copolymère de polyfluorure de vinylidène et de polytétrafluorure d'éthane, et un copolymère de vinylacétate et de vinylalcool.

Parmi ces polymères le polyfluorure de vinylidène (PVDF) est préféré. Le PVDF a l'avantage de présenter un très faible gonflement en présence de solvant ce qui limite les variations dimentionnelles au cours de la fabrication du générateur électrochimique.

Ledit solvant est un solvant organique choisi parmi la cyclohexanone, le dichlorométhane, la diméthylacétamide (DMA), la diméthylformamide (DMF), l'hexaméthylphosphoramide (HMPA), la diméthylsulfoxyde (DMSO), le triéthylphosphate (TEP), la N-méthylpyrolidone (NMP) et leurs mélanges. Il est souhaitable que l'interaction entre le polymère et le solvant soit faible.

On utilise de préférence un solvant organique dans lequel le polymère se dissout sans difficultés et qui peut être facilement éliminé par chauffage à une température modérée sans risque d'endommager la matière active.

Le polymère choisi est mis en solution concentrée dans ce solvant. La concentration en polymère ne doit pas être trop élevée car c'est l'un des paramètres qui conditionne la porosité du film; il est préférable que la solution contienne au moins 50% de solvant.

Le polymère en solution est déposé à la surface du support par une méthode connue comme l'immersion, l'enduction, la pulvérisation, etc... Si cette surface présente des irrégularités et une certaine porosité, elles sont comblées par la solution et facilite l'accrochage du film.

Selon une première variante, ladite couche poreuse est imprégnée superficiellement d'un agent mouillant avant d'être recouverte dudit film. Cet agent mouillant est par exemple un solvant organique volatil.

Selon une deuxième variante, ladite solution d'un polymère dans un solvant contient en outre un agent mouillant dans une proportion inférieure à 10% en poids dudit polymère. Cet agent permet d'améliorer la pénétration et la répartition de l'électrolyte dans le film de polymère.

Selon une troisième variante, ladite solution d'un polymère dans un solvant comprend en outre une faible proportion d'un non-solvant, ladite proportion étant insuffisante pour provoquer la précipitation du polymère. La présence d'une faible quantité d'un non-solvant faible favorise l'organisation tridimensionnelle du polymère lors de sa précipitation.

On entend par non-solvant, un liquide dans lequel le polymère n'est pas soluble (non-solvant fort) ou bien est très peu soluble (non-solvant faible) à la température d'opération. Dans le cas où le non-solvant choisi est l'eau pure ou en mélange, cette température est comprise entre 5°C et 80°C.

Ledit non-solvant est choisi parmi l'eau, l'éthanol, l'éthylène glycol, le glycérol, l'acétone, le carbonate de propylène, le dichlorométhane, l'acétate d'éthyle, le butanol, le pentanol, l'acétonitrile et leurs mélanges. Si le non-solvant choisi est l'eau, le procédé selon l'invention a l'avantage de ne pas être polluant pour l'environnement et de faciliter le recyclage des solvants.

Le film est mis en contact avec le non-solvant. Le solvant est alors remplacé par le non-solvant avec lequel il est miscible, ce qui provoque la précipitation du polymère. La récupération ultérieure du solvant extrait par le non-solvant est ainsi facilitée. Un film poreux de polymère solide recouvre alors la surface de l'électrode. Il suffit d'évaporer par chauffage modéré le non-solvant et éventuellement une partie du solvant résiduel.

Ledit électrolyte comprend un sel de lithium dissout dans un solvant organique. Le solvant organique comporte un mélange d'éthers et/ou d'esters, les esters étant choisis parmi les carbonates linéaires, et les carbonates cycliques de plus de 4 atomes de carbone, comme par exemple les carbonates de propylène, d'éthylène, de butylène, de diéthyle, de diméthyle, et leurs mélanges.

Le sel de lithium choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI), et le trifluorométhanesulfoneméthide de lithium LiC(CF₃SO₂)₃ (LiTFSM).

De préférence dans le cas où le polymère est le PVDF, on chauffe à une température comprise entre 90°C et 100°C. Le film de polymère coagulé est parfaitement stable jusqu'à une température de 75°C et il fond au delà de 105°C. La fusion ne se produit pas à une valeur précise, mais s'étale sur une plage de température. Elle démarre au début de la plage et ne devient complète qu'à la fin de celle-ci. On se placera donc de préférence juste avant ou au début de la plage. Par ailleurs on sait que le PVDF à l'état brut fond au-dessus de 150°C.

De préférence, on presse à une pression comprise entre 9,81N/cm² et 98,1N/cm².

La présente invention a également pour objet un générateur électrochimique réalisé par le procédé selon l'invention.

D'autres caractéristiques et avantages de la présente invention apparaîtront au cours des exemples suivants de réalisation, donnés bien entendu à titre illustratif et non limitatif, et dans le dessin annexé sur lequel:
- la figure 1 est une vue en coupe schématique d'un générateur de type bouton réalisé par le procédé selon l'invention,
- la figure 2 représente le spectre d'impédance du générateur selon l'invention, la partie imaginaire Z" en ohms est donnée en ordonnée, et en abscisse la partie réelle Z' en ohms,
- la figure 3 montre l'évolution de la tension du générateur selon l'invention au cours d'un cyclage, la tension U du générateur en volts est donnée en ordonnée, et en abscisse le temps t en heures,
- la figure 4 montre l'évolution de la capacité d'un générateur selon l'invention au cours du cyclage, la capacité C du générateur en µAh est donnée en ordonnée, et en abscisse le nombre de cycles N.

### EXEMPLE 1

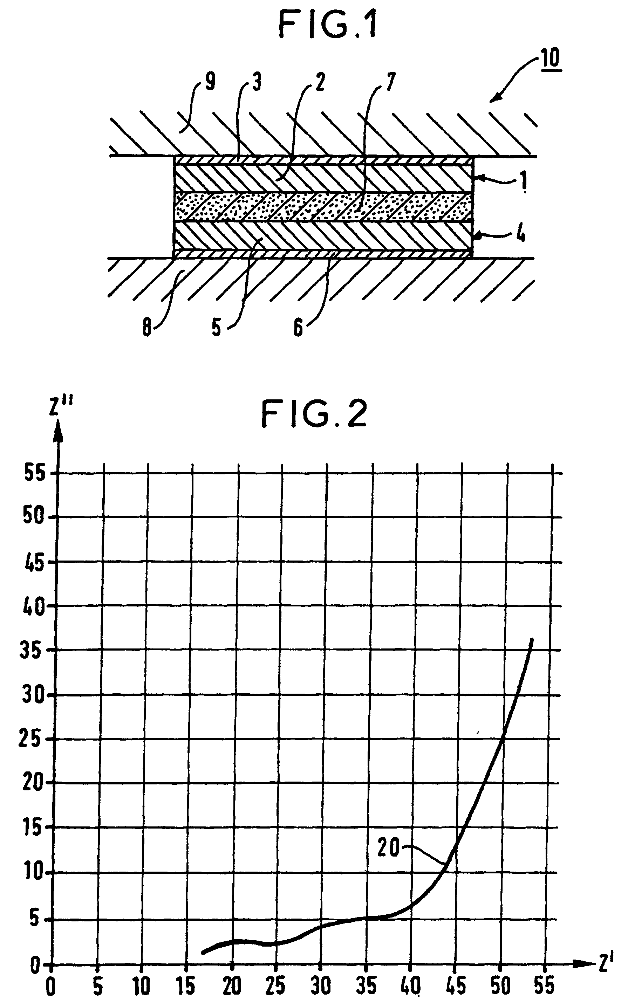

On réalise par le procédé selon l'invention un générateur électrochimique rechargeable au lithium **A** de type bouton comme représenté sur la figure 1.

L'anode **1** est composée d'une couche poreuse **2** déposée sur un collecteur de cuivre **3**. La couche poreuse **2** contient du graphite comme matière électrochimiquement active et un liant qui est le polyfluorure de vinylidène (PVDF).

La cathode **4** est composée d'une couche poreuse **5** déposée sur un collecteur d'aluminium **6**. La couche poreuse **5** contient un oxyde mixte de nickel et de lithium comme matière électrochimiquement active et un liant qui est le polyfluorure de vinylidène (PVDF).

On prépare une solution de polymère contenant 15% en poids de PVDF, 60% en poids de triéthylphosphate (TEP) comme solvant, et 25% en poids de tétrahydrofurane (THF) qui joue le rôle de diluant pour ajuster la viscosité de la solution. On étale cette solution sous forme d'un film sur un support inerte, comme par exemple une feuille d'aluminium, une plaque de verre ou de PTFE, etc...

On procède à l'évaporation du THF afin d'amorcer l'organisation tridimensionnelle des chaînes polymériques et de faciliter la précipitation du polymère. Le film est plongé dans un non-solvant qui est l'eau, ce qui provoque la précipitation du polymère. On obtient alors une membrane poreuse **7** de PVDF qui est séchée à l'air et peut être conservée dans cet état jusqu'à son utilisation.

Au moment de l'assemblage du générateur, la membrane poreuse **7** et les électrodes **1**, **4** sont séchées sous vide respectivement à 60°C et 120°C puis imprégnées d'électrolyte. L'électrolyte se compose d'un solvant, constitué d'un mélange équipondéral de carbonate de propylène (PC) et de carbonate d'éthylène (EC), dans lequel est dissout de l'hexafluoroarsenate de lithium LiAsF₆.

La cathode **4**, la membrane **7** et l'anode **1** sont superposées dans cet ordre et maintenues sous pression à une température de 95°C pendant 10 secondes. L'ensemble obtenu est placé dans une coupelle **8** fermée par un couvercle **9** pour former un générateur **10** de type bouton.

On trace le spectre d'impédance **20** du générateur entre 0,1Hz et 65000Hz qui est représenté sur la figure **2** pour une surface d'électrodes de 1,13cm². On constate que la résistance de polarisation est faible, de l'ordre de 50Ω/cm².

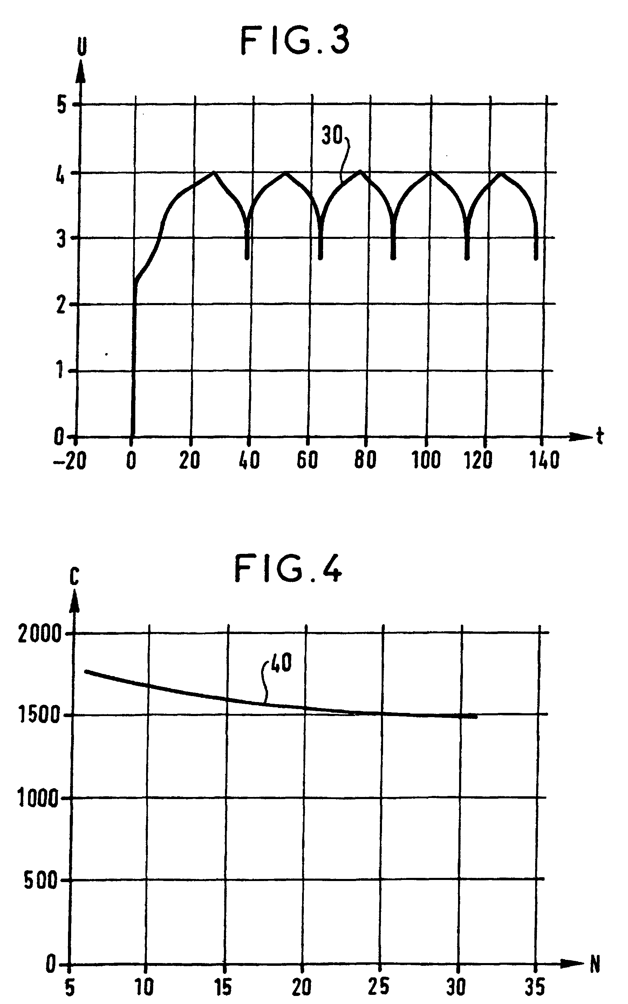

Le générateur **10** est cyclé à un régime de Ic/20, où Ic correspond au régime permettant de décharger le générateur en une heure. La courbe **30** sur la figure 3 et la courbe **40** sur la figure 4 montre respectivement l'évolution de la tension et de la capacité du générateur durant ce cyclage.

### EXEMPLE 2

Selon l'invention on fabrique un générateur électrochimique rechargeable au lithium **B** de type bouton, dont les électrodes sont analogues à celles de l'exemple 1 et contenant le même électrolyte, mais qui est réalisé de manière différente.

Les électrodes après fabrication sont séchées sous vide à 120°C puis recouverte d'un film de solution contenant 15% en poids de PVDF, 60% en poids de triéthylphosphate (TEP) comme solvant volatil, et 25% en poids de tétrahydrofurane (THF).

Après évaporation du THF, le film est plongé dans de un non-solvant qui est l'eau, ce qui provoque la précipitation du polymère. On obtient alors une membrane poreuse de PVDF qui est séchée à l'air

Les électrodes sont accolées par leur face portant le film polymère et maintenues sous pression à une température de 95°C pendant 10 secondes. L'ensemble ainsi obtenu est placé dans une coupelle fermée par un couvercle pour former le générateur **B** de type bouton.

### EXEMPLE 3

Selon l'invention on fabrique un générateur électrochimique rechargeable au lithium **C** de type bouton, dont les électrodes sont analogues à celles de l'exemple 1 et contenant le même électrolyte, mais qui est réalisé de manière différente.

Les électrodes après fabrication sont séchées sous vide à 120°C puis recouverte d'un film de solution contenant 12,5% en poids de PVDF et 87,5% de TEP.

Après égouttage, l'électrode est plongée pendant 20 minutes dans l'eau qui est un non-solvant fort afin de provoquer la précipitation du polymère. L'électrode est ensuite séchée à l'air, d'abord à 35°C puis à 120°C, pour enlever toute trace d'eau. On obtient une couche de PVDF solide d'épaisseur 50µm et de porosité 75%, fortement adhérente.

Les électrodes sont accolées par leur face portant le film polymère et maintenues sous pression à une température de 95°C pendant 10 secondes. L'ensemble ainsi obtenu est placé dans une coupelle fermée par un couvercle pour former le générateur C de type bouton.

### EXEMPLE 4

Selon l'invention on fabrique un générateur électrochimique rechargeable au lithium D de type bouton, dont les électrodes sont analogues à celles de l'exemple 1 et contenant le même électrolyte, mais qui est réalisé de manière différente.

Les électrodes après fabrication sont séchées sous vide à 120°C puis recouverte d'un film de solution de 9,1% en poids de PVDF, de 54,5% de NMP et de 36,4% d'éthanol.

Après égouttage, l'électrode est plongée dans de l'eau portée à 80°C, elle est ensuite séchée à l'air à 35°C. On obtient une couche de PVDF solide de porosité 25%.

Les électrodes sont accolées par leur face portant le film polymère et maintenues sous pression à une température de 95°C pendant 10 secondes. L'ensemble ainsi obtenu est placé dans une coupelle fermée par un couvercle pour former le générateur D de type bouton.

Bien entendu la présente invention n'est pas limitée aux générateurs de format bouton mais tout type de générateur à électrodes planes est envisageable. De plus grâce à la flexibilité de l'ensemble électrodes-séparateur, l'invention peut s'appliquer également à des générateurs de type spiralés. On pourra utiliser pour la réalisation des électrodes toute matière électrochimiquement active d'électrode connue et tout liant polymère usuel.

## Revendications

1. Procédé de fabrication d'un générateur électrochimique à électrolyte organique comprenant au moins un couple électrochimique composé de deux électrodes encadrant un film solide de polymère poreux contenant ledit électrolyte, chaque électrode comportant une couche poreuse contenant un matériau électrochimiquement actif et un liant, **caractérisé par le fait qu'**il comprend les étapes suivantes:
- on met en solution un polymère dans un solvant,
- on étale ladite solution sur un support sous forme d'un film,
- on immerge ledit film de solution dans un non-solvant volatil miscible avec ledit solvant afin de précipiter ledit polymère,
- on sèche ledit film de polymère pour éliminer ledit non-solvant,
- on presse ledit couple imprégné avec ledit électrolyte, composé dudit film de polymère placé entre lesdites électrodes et à leur contact, en le chauffant à une température inférieure ou égale à la température de début de fusion dudit film de polymère de manière à obtenir une fusion incomplète dudit polymère, lesdites électrodes devenant indissociables après refroidissement.

2. Procédé selon la revendication 1, dans lequel ledit support est un support inerte.

3. Procédé selon la revendication 2, dans lequel on imprègne ledit film de polymère et chacune desdites électrodes avec ledit électrolyte, puis on place ledit film de polymère entre lesdites électrodes et à leur contact pour former ledit couple.

4. Procédé selon la revendication 2, dans lequel on place ledit film de polymère entre lesdites électrodes et à leur contact pour former ledit couple, puis on imprègne ledit couple avec ledit électrolyte.

5. Procédé selon la revendication 1, dans lequel ledit support est l'une desdites électrodes.

6. Procédé selon la revendication 5, dans lequel on imprègne ladite électrode comprenant ledit film de polymère avec ledit électrolyte, puis on recouvre ladite électrode du côté dudit film avec l'autre desdites électrodes imprégnée avec ledit électrolyte, pour former ledit couple.

7. Procédé selon la revendication 1, dans lequel chacune desdites électrodes est utilisée comme support.

8. Procédé selon la revendication 7, dans lequel on imprègne chacune desdites électrodes comprenant ledit film de polymère avec ledit électrolyte, puis on accole lesdites électrodes pour former ledit couple de telle manière que lesdits films soient en contact.

9. Procédé selon l'une des revendications 5 à 8, dans lequel ladite couche poreuse de ladite électrode est imprégnée superficiellement d'un agent mouillant avant d'être recouverte dudit film.

10. Procédé selon l'une des revendications précédentes, dans lequel ladite solution d'un polymère dans un solvant contient en outre un agent mouillant dans une proportion inférieure à 10% en poids dudit polymère.

11. Procédé selon l'une des revendications précédentes, dans lequel ladite solution d'un polymère dans un solvant comprend en outre une faible proportion d'un non-solvant, ladite proportion étant insuffisante pour provoquer la précipitation du polymère.

12. Procédé selon l'une des revendications précédentes, dans lequel ladite solution d'un polymère dans un solvant contient au moins 50% en poids dudit solvant.

13. Procédé selon l'une des revendications précédentes, dans lequel ledit polymère est choisi parmi le polyfluorure de vinylidène, le polychlorure de vinyle, le polyméthylmétacrylate, l'acétate de cellulose, une polysulfone, un polyéther, une polyoléfine, et parmi un alliage du polyfluorure de vinylidène avec un polymère choisi parmi une polysulfone, le polyméthylmétacrylate, le polyvinylpyrolidone, un copolymère de polyfluorure de vinylidène et de polytétrafluorure d'éthane, et un copolymère de vinylacétate et de vinylalcool.

14. Procédé selon l'une des revendications précédentes, dans lequel ledit solvant est un solvant organique choisi parmi la cyclohexanone, le dichlorométhane, la diméthylacétamide, la diméthylformamide, l'hexaméthylphosphoramide, la diméthylsulfoxyde, le triéthylphosphate, la N-méthylpyrolidone et leurs mélanges.

15. Procédé selon l'une des revendications précédentes, dans lequel ledit non-solvant est choisi parmi l'eau, l'éthanol, l'éthylène glycol, le glycérol, l'acétone, le carbonate de propylène, le dichlorométhane, l'acétate d'éthyle, le butanol, le pentanol, l'acétonitrile et leurs mélanges.

16. Procédé selon l'une des revendications précédentes, dans lequel ledit électrolyte contient un solvant organique comportant un mélange d'éthers et/ou d'esters, les esters étant choisis parmi les carbonates linéaires, et les carbonates cycliques de plus de 4 atomes de carbone.

17. Procédé selon l'une des revendications précédentes, dans lequel ledit électrolyte comprend un sel de lithium choisi parmi le perchlorate de lithium, l'hexafluoroarsénate de lithium, l'hexafluorophosphate de lithium, le tétrafluoroborate de lithium, le trifluorométhanesulfonate de lithium, le trifluorométhanesulfonimide de lithium, le trifluorométhanesulfoneméthide de lithium et leurs mélanges.

18. Procédé selon l'une des revendications précédentes, dans lequel on chauffe à une température comprise entre 90°C et 100°C.

19. Procédé selon l'une des revendications précédentes, dans lequel on presse à une pression comprise entre 9,81N/cm² et 98,1N/cm².

20. Générateur électrochimique réalisé par le procédé selon l'une des revendications 1 à 19, comprenant au moins un couple électrochimique composé d'une anode et d'une cathode encadrant un film solide de polymère poreux contenant un électrolyte organique, dans lequel
- le matériau électrochimiquement actif de ladite anode est un matériau carboné susceptible d'insérer du lithium dans sa structure et le liant de ladite anode est le polyfluorure de vinylidène,
- le matériau électrochimiquement actif de ladite cathode est un oxyde d'un métal de transition et le liant de ladite cathode est le polyfluorure de vinylidène,
- ledit électrolyte est un solvant organique comportant un mélange d'éthers et/ou d'esters dans lequel est dissout un sel de lithium, et
- ledit film est en polyfluorure de vinylidène et possède des pores dont la taille moyenne est comprise entre 0,1µm et 1µm,
**caractérisé en ce que** ledit générateur a une stucture unitaire, ladite anode et ladite cathode étant indissociables, et **en ce que** ledit film a un volume poreux représentant 30% à 95% du volume dudit film.

## Patentansprüche

1. Verfahren zur Herstellung eines elektrochemischen Generators mit organischem Elektrolyten mit wenigstens einem elektrochemischen Paar, das sich aus zwei Elektroden zusammensetzt, die einen festen Film aus einem den Elektrolyten enthaltenden porösen Polymer umgeben, wobei jede Elektrode eine poröse Schicht aufweist, die ein elektrochemisch aktives Material und ein Bindemittel enthält, **dadurch gekennzeichnet, dass** es die folgenden Schritte umfasst:
- in Lösung bringen eines Polymers in einem Lösungsmittel,
- Aufbringen der Lösung in Form eines Films auf einen Träger,
- Tauchen des Lösungsfilms in ein mit dem Lösungsmittel mischbares, flüchtiges Nicht-Lösungsmittel um das Polymer auszufällen,
- Trocknen des Polymerfilms zum Entfernen des Nicht-Lösungsmittels,
- Pressen des Paars, das mit dem Elektrolyten imprägniert ist, der aus dem zwischen den Elektroden und mit diesen in Kontakt befindlichen Polymerfilm besteht, wobei es auf eine Temperatur kleiner oder gleich der Starttemperatur des Schmelzens des Polymerfilms erwärmt wird, derart dass ein unvollständiges Schmelzen des Polymers stattfindet, und die Elektroden nach Abkühlen nichttrennbar sind.

2. Verfahren nach Anspruch 1, bei welchem der Träger ein inerter Träger ist.

3. Verfahren nach Anspruch 2, bei welchem der Polymerfilm und jede der Elektroden mit dem Elektrolyten imprägniert wird, und dann der Polymerfilm zwischen die Elektroden und in Kontakt mit diesen gebracht wird um das Paar zu formen.

4. Verfahren nach Anspruch 2, bei welchem der Polymerfilm zwischen die Elektroden und in Kontakt mit diesen gebracht wird um das Paar zu formen, dann das Paar mit dem Elektrolyten imprägniert wird.

5. Verfahren nach Anspruch 1, bei welchem der Träger die eine der Elektroden ist.

6. Verfahren nach Anspruch 5, bei welchem die den Polymerfilm umfassende Elektrode mit dem Elektrolyten imprägniert wird, dann die Elektrode auf der Seite des Films mit der mit dem Elektrolyten imprägnierten anderen der Elektroden bedeckt wird um das Paar zu formen.

7. Verfahren nach Anspruch 1, bei welchem jede der Elektroden als Träger verwendet wird.

8. Verfahren nach Anspruch 7, bei welchem jede der den Polymerfilm umfassenden Elektroden mit dem Elektrolyten imprägniert wird, dann die Elektroden zum Formen des Paars derart gefügt werden, dass die Filme in Kontakt sind.

9. Verfahren nach einem der Ansprüche 5 bis 8, bei welchem die poröse Schicht der Elektrode, bevor sie mit dem Film bedeckt wird, mit einem Benetzungsmittel oberflächlich imprägniert wird.

10. Verfahren nach einem der vorhergehenden Ansprüche, bei welchem die Lösung eines Polymers in einem Lösungsmittel außerdem ein Benetzungsmittel in einem Anteil von weniger als 10 Gew.-% des Polymers enthält.

11. Verfahren nach einem der vorhergehenden Ansprüche, bei welchem die Lösung eines Polymers in einem Lösungsmittel außerdem einen geringen Anteil eines Nicht-Lösungsmittels enthält, wobei der Anteil nicht ausreicht um das Ausfällen des Polymers zu bewirken.

12. Verfahren nach einem der vorhergehenden Ansprüche, bei welchem die Lösung eines Polymers in einem Lösungsmittel wenigstens 50 Gew.-% des Lösungsmittels enthält.

13. Verfahren nach einem der vorhergehenden Ansprüche, bei welchem das Polymer gewählt ist aus Polyvinylidenfluorid, Polyvinylchlorid, Polymethylmetacrylat, Celluloseacetat, einem Polysulfon, einem Polyether, einem Polyolefin, und aus einer Legierung von Polyvinylidenfluorid mit einem Polymer, gewählt aus einem Polysulfon, Polymethylmetacrylat, Polyvinylpyrolidon, einem Kopolymer von Polyvinylidenfluorid und Polyethantetrafluorid, und einem Kopolymer von Vinylacetat und Vinylalkohol.

14. Verfahren nach einem der vorhergehenden Ansprüche, bei welchem das Lösungsmittel ein organisches Lösungsmittel ist, gewählt aus Cyklohexanon, Dichlormethan, Dimethylacetamid, Dimethylformamid, Hexamethylphosphoramid, Dimethylsulfoxid, Triethylphosphat, N-Methylpyrolidon und deren Mischungen.

15. Verfahren nach einem der vorhergehenden Ansprüche, bei welchem das Nicht-Lösungsmittel gewählt ist aus Wasser, Ethanol, Ethylenglykol, Glycerol, Aceton. Propylencarbonat, Dichlormethan, Ethylacetat, Butanol, Pentanol, Acetonitril und deren Mischungen.

16. Verfahren nach einem der vorhergehenden Ansprüche, bei welchem der Elektrolyt ein organisches Lösungsmittel enthält, welches eine Mischung aus Ether und/oder Ester umfasst, wobei die Ester aus linearen Carbonaten und cyklischen Carbonaten mit mehr als 4 Kohlenstoffatomen gewählt sind.

17. Verfahren nach einem der vorhergehenden Ansprüche, bei welchem der Elektrolyt ein Lithiumsalz umfasst, gewählt aus Lithiumperchlorat, Lithiumhexafluorarsenat, Lithiumhexafluorphosphat, Lithiumtetrafluorborat, Lithiumtrifluormethansulfonat, Lithiumtrifluormethansulfonimid, Lithiumtrifluormethansulfonmethid und deren Mischungen.

18. Verfahren nach einem der vorhergehenden Ansprüche, bei welchem auf eine Temperatur zwischen 90°C und 100°C erwärmt wird.

19. Verfahren nach einem der vorhergehenden Ansprüche, bei welchem mit einem Druck zwischen 9,81 N/cm² und 98,1 N/cm² gepresst wird.

20. Elektrochemischer Generator, hergestellt durch das Verfahren nach einem der Ansprüche 1 bis 19, mit wenigstens einem elektrochemischen Paar, welches sich aus einer Anode und eine Kathode zusammensetzt, die einen festen Film aus einem einen organischen Elektrolyten enthaltenden porösen Polymer umgeben, bei welchem
- das elektrochemisch aktive Material der Anode ein kohlenstoffhaltiges Material ist, welches geeignet ist Lithium in seine Struktur einzufügen, und das Bindemittel der Anode Polyvinylidenfluorid ist,
- das elektrochemisch aktive Material der Kathode ein Oxid eines Übergangsmetalls ist und das Bindemittel der Kathode Polyvinylidenfluorid ist,
- der Elektrolyt ein organisches Lösungsmittel ist, welches eine Mischung von Ether und/oder Ester umfasst, in welchem ein Lithiumsalz gelöst ist, und
- der Film aus Polyvinylidenfluorid besteht und Poren besitzt, deren mittlere Größe zwischen 0,1 µm und 1 µm liegt,
**dadurch gekennzeichnet, dass** der Generator eine einheitliche Struktur hat, die Anode und die Kathode nichttrennbar sind, und dass der Film ein Porenvolumen hat, welches 30% bis 95% des Volumens des Films ausmacht.

## Claims

1. A method of manufacturing an organic electrolyte electrochemical cell comprising at least one electrochemical couple made up of two electrodes sandwiching a solid film of porous polymer containing said electrolyte, each electrode comprising a porous layer containing an electrochemically active material and a binder, the method being **characterized by** the fact that it comprises the following steps:
· a polymer is put into solution in a solvent;
· said solution is spread in the form of a film on a support;
· said film of solution is immersed in a volatile non-solvent that is miscible with said solvent in order to precipitate said polymer;
· said polymer film is dried to eliminate said non-solvent; and
· said couple made up of said polymer film placed between said electrodes and in contact therewith, and impregnated with said electrolyte, is pressed while being heated to a temperature less than or equal to the temperature at which said polymer film starts to melt so as to obtain incomplete melting of said polymer, said electrodes becoming unseparable after cooling.

2. A method according to claim 1, in which said support is an inert support.

3. A method according to claim 2, in which said polymer film and each of said electrodes is impregnated with said electrolyte, and then said polymer film is placed between electrodes and in contact therewith to form said couple.

4. A method according to claim 2, in which said polymer film is placed between said electrodes and in contact therewith to form said couple, and said couple is then impregnated with said electrolyte.

5. A method according to claim 1, in which said support is one of said electrodes.

6. A method according to claim 5, in which said electrode including said polymer film is impregnated with said electrolyte, and then said electrode is covered on the same side as said film with the other of said electrodes impregnated with said electrolyte to form said couple.

7. A method according to claim 1, in which each of said electrodes is used as a support.

8. A method according to claim 7, in which each of said electrodes including said polymer film is impregnated with said electrolyte, after which said electrodes are put together to form said couple in such a manner that said films are in contact.

9. A method according to any one of claims 5 to 8, in which the surface of said electrode porous layer is impregnated with a wetting agent prior to being covered in said film.

10. A method according to any preceding claim, in which said solution of a polymer in a solvent further contains a wetting agent at a concentration of less than 10% by weight of said polymer.

11. A method according to any preceding claim, in which said solution of a polymer in a solvent further includes a small quantity of a non-solvent, said quantity being insufficient to cause the polymer to be precipitated.

12. A method according to any preceding claim, in which said solution of a polymer in a solvent contains at least 50% by weight of said solvent.

13. A method according to any preceding claim, in which said polymer is selected from polyvinylidene fluoride; polyvinyl chloride; polymethylmethacrylate; cellulose acetate; a polysulfone; a polyether; a polyolefin; and from an alloy of polyvinylidene fluoride with a polymer selected from a polysulfone, polymethylmethacrylate, polyvinylpyrolidone, a copolymer of vinylidene fluoride and ethane tetrafluoride, and a copolymer of vinylacetate and of vinylalcohol.

14. A method according to any preceding claim, in which said solvent is an organic solvent selected from: cyclohexanone; dichloromethane; dimethylacetamide; dimethylformamide; hexamethylphosphoramide; dimethylsulfoxide; triethylphosphate; N-methylpyrolidone; and mixtures thereof.

15. A method according to any preceding claim, in which said non-solvent is selected from: water, ethanol, ethylene-glycol, glycerol, acetone, proplyene carbonate, dichloromethane, ethyl acetate, butanol, pentanol, acetonitril, and mixtures thereof.

16. A method according to any preceding claim, in which said electrolyte contains an organic solvent comprising a mixture of ethers and/or esters, the esters being selected from linear carbonates and cyclic carbonates having more than 4 carbon atoms.

17. A method according to any preceding claim, in which said electrolyte includes a lithium salt selected from lithium perchlorate, lithium hexafluoroarsenate, lithium hexafluorophosphate, lithium tetrafluoroborate, lithium trifluoromethanesulfonate, lithium trifluoromethanesulfonimide, lithium trifluoromethanesulfonmethide, and mixtures thereof.

18. A method according to any preceding claim, in which heating is performed at a temperature lying in the range 90°C to 100°C.

19. A method according to any preceding claim, in which pressing is performed at a pressure lying in the range 9.18N/cm² to 98.1N/cm².

20. An electrochemical cell made by the method according to any one of claims 1 to 19, the cell comprising at least one electrochemical couple made up of an anode and a cathode sandwiching a solid film of porous polymer containing an organic electrolyte, in which:
· the electrochemically active material of said anode is a carbon-containing material suitable for inserting lithium in its structure and the binder of said anode is polyvinylidene fluoride;
· the electrochemically active material of said cathode is an oxide of a transition metal and the binder of said cathode is polyvinylidene fluoride;
· said electrolyte is an organic solvent comprising a mixture of ethers and/or esters in which a lithium salt is dissolved; and
· said film is made of polyvinylidene fluoride and has pores of average size lying in the range 0.1 µm to 1 µm, the cell being **characterized in that** said generator is of unitary structure, said anode and said cathode being unseparable, and **in that** said film has a porous volume representing 30% to 95% of the volume of said film.
